Europäisches Patentamt

(19) European Patent Office

Office européen des brevets

(11) Publication number: **0 037 395**
**B1**

(12) **EUROPEAN PATENT SPECIFICATION**

(45) Date of publication of patent specification: **27.07.83**

(51) Int. Cl.³: **F 01 P 7/14,** F 01 M 5/00, F 16 N 13/22

(21) Application number: **79901486.5**

(22) Date of filing: **28.09.79**

(86) International application number:
**PCT/US79/00799**

(87) International publication number:
**WO 81/00881 02.04.81 Gazette 81/8**

(54) **FLUID SEQUENCE BYPASS APPARATUS.**

(43) Date of publication of application:
**14.10.81 Bulletin 81/41**

(45) Publication of the grant of the patent:
**27.07.83 Bulletin 83/30**

(84) Designated Contracting States:
**AT CH DE FR GB**

(56) References cited:
**DE - A - 1 807 639**
**IT - A - 558 700**
**US - A - 2 500 627**
**US - A - 3 057 436**
**US - A - 3 065 743**
**US - A - 3 090 365**
**US - A - 3 486 582**
**US - A - 3 943 909**
**US - A - 4 114 571**

(73) Proprietor: **CATERPILLAR TRACTOR CO.**
**100 Northeast Adams Street**
**Peoria Illinois 61629 (US)**

(72) Inventor: **OBERTH, Hans G.**
**Stiftingtalstrasse 71**
**A-8010 Graz (AT)**
Inventor: **AMINGER, Gerhard A.**
**Grottenhofstrasse 92**
**A-8053 Graz (AT)**

(74) Representative: **Jackson, Peter Arthur et al,**
**GILL JENNINGS & EVERY 53-64 Chancery Lane**
**London WC2A 1HN (GB)**

Courier Press, Leamington Spa, England

This invention relates to a fluid sequencing bypass valve for directing pressurized fluid to a secondary receptor only when the pressure in a primary receptor is of a sufficient value, and for bypassing pressurized fluid to a sump when the pressure in the primary receptor reaches a selected higher value.

In relatively large engines, it is desirable to cool the pistons by impelling jets of lubricating oil onto their surfaces. Generally, the oil is delivered from a secondary manifold to the jets. The secondary manifold is directly connected to the main manifold, or to the line which supplies pressurized fluid thereto.

During engine startup and during low idle running, it is important that the main lubricating manifold receives as much fluid flow as possible, and at a reasonably high pressure, so that this fluid can be delivered to the bearings of the engine which rest against the crankshaft and to other bearing surfaces. However, when the prior art structure is used, wherein the secondary manifold is directly connected to the main manifold, some of the fluid flow is delivered to the jets which cool the pistons. Such cooling of pistons is, however, not necessary during startup and at low idle running of the engine, since the pistons are not being greatly heated under these relatively low load conditions. Thus, the oil delivered to the secondary manifold and therefrom to the cooling jets is basically wasted and, worse, serves to reduce the amount of oil delivered to the crankshaft bearing and to the other surfaces which require lubrication.

Generally, the pump which is pumping the lubricating fluid to the manifolds has a bypass valve built directly into it or located closely downstream therefrom. Since the filters in such a system are generally downstream from the bypass valve, a significant pressure drop can take place within the filters, particularly as they become clogged. Thus, in the typical prior art method of controlling pressure by having a bypass valve built directly into or closely adjacent the pump, the pressure actually delivered to the main manifold, and a secondary manifold when present, can be considerably lower than that set at the bypass valve. It is clear that this is undesirable, since lubricating fluid may be supplied at too low a pressure to adequately carry out lubrication of the crankshaft bearings, etc., and provide such jet action as is required to cool the pistons of relatively large engines.

DE-A-1807639 discloses an engine having a primary passage for directing oil to bearing surfaces of the engine, a secondary passage for directing oil to pistons of the engine to cool the pistons and a control valve having a piston responsive to the oil pressure in the primary passage for preventing delivery of oil to the secondary passage until the oil pressure in the primary passage reaches an initiating value. When the oil pressure supplied to the primary passage exceeds a higher selected value above the initiating value, a further pressure relief valve opens and allows excess fluid delivery to a sump. With this arrangement, the two valves are quite independent and there is no guarantee that they will open in the correct sequence in response to precise pressure differences.

US-A-2500627 discloses a distribution valve in which a piston is subjected at one end to supply pressure and moves under increasing pressure successively from first to second and third positions in which oil is supplied to a first motor, to the first and a second motor, and to a sump, respectively. The piston has a tunnel leading from an orifice at the one end of the piston through the piston into a second end thereof and selectively communicating via an exit orifice with the sump to bleed off fluid, the pressure of which otherwise acts on the second end of the piston. However the exit orifice is closed when the piston is in the first position and is opened upon increasing supply pressure thereby bleeding off the fluid acting on the second end of the piston and allowing the piston to move to the second and third positions. The piston acts against one spring in moving from the first to the second position, and then picks up a second piston and carries the second piston along with it against the action of additional bias provided by a second spring in moving from the second to the third position. This is a complex construction with multiple moving parts.

In accordance with the present invention, apparatus having a primary fluid receptor which is arranged to be supplied with fluid under pressure; at least one secondary receptor; a sump; a piston which is reciprocally mounted in a bore communicating with the primary and secondary receptors and with the sump whereby a first end of the piston is exposed to fluid pressure in the primary receptor to urge the piston from a first to a second position against the action of a spring, and from the second to a third position against additional bias; the piston, when in the first position preventing delivery of the fluid to the second receptor, when in the second position to which the piston moves when the fluid pressure in the primary receptor reaches an initiating value, allowing delivery of the fluid to the secondary receptor, and, when in the third position to which the piston moves when the fluid pressure in the primary receptor reaches a selected value above the initiating value, allowing delivery of excess of the fluid to the sump; and the piston having a tunnel extending from an orifice in the first end through the piston to a second end thereof and selectively communicating via an exit orifice with the sump to bleed off fluid, the pressure of which otherwise acts on the second end of the piston; is characterised in that the exit orifice is open in the first and second positions of the piston and that the piston cooperates with a part mounted at the end of the bore adjacent the piston second end so that the exit orifice is closed as the piston moves towards the third position, thereby trapping fluid in the bore and providing fluid pressure on the second end of the piston to provide the additional bias biasing the piston back towards the second position.

The apparatus is simple and particularly useful when incorporated in an engine such that the primary receptor directs fluid, in that case oil, to bearing surfaces of the engine, and the secondary receptor directs similar fluid to pistons of the engine to cool the pistons. In such an engine, during start up and at low idle speeds, the main manifold, forming the primary receptor, receives all of the flow of oil from a pump. On the other hand, when the engine begins running at higher speeds, and in particular when the pressure in the main manifold reaches the initiating value, the secondary manifold, forming the secondary receptor, is connected to the flow so that piston cooling jets, which receive the flow from the secondary manifold, can operate and deliver oil to cool the pistons. Filtered oil should be supplied to both the main and secondary manifolds because the piston cooling oil also lubricates the piston pin.

The apparatus in accordance with the invention may be such that the piston has a first land controlling the delivery of fluid from a first conduit, which leads to the bore and which communicates with the primary receptor, to the secondary receptor; and a second land controlling delivery of fluid from a second conduit, which leads to the bore, to a third conduit which leads from the bore to a sump. This parallel fluid supply to the apparatus leads to the advantage that the first and second conduits may be connected to a common fluid supply incorporating a pump which pumps fluid through filtering means to the primary receptor, the second conduit leading from upstream of the filtering means. With this arrangement, filtered fluid is provided to the first and second receptors, i.e. to bearing surfaces and for piston cooling when the apparatus is fitted to an engine, but unfiltered fluid is bypassed. This enables smaller filters to be used.

In the accompanying drawings:

Figure 1 illustrates, in a partially perspective partially schematic view, an engine utilizing an embodiment in accordance with the present invention;

Figure 2 illustrates in side section view, an embodiment of the improvement in accordance with the present invention in a first mode of operation;

Figure 3 illustrates in reduced size, a view similar to Figure 2 but with the embodiment in a second mode of operation;

Figure 4 illustrates a view similar to that of Figures 2 and 3, but with the embodiment in yet a third mode of operation; and

Figure 5 illustrates, graphically, the operation of an embodiment in accordance with the present invention.

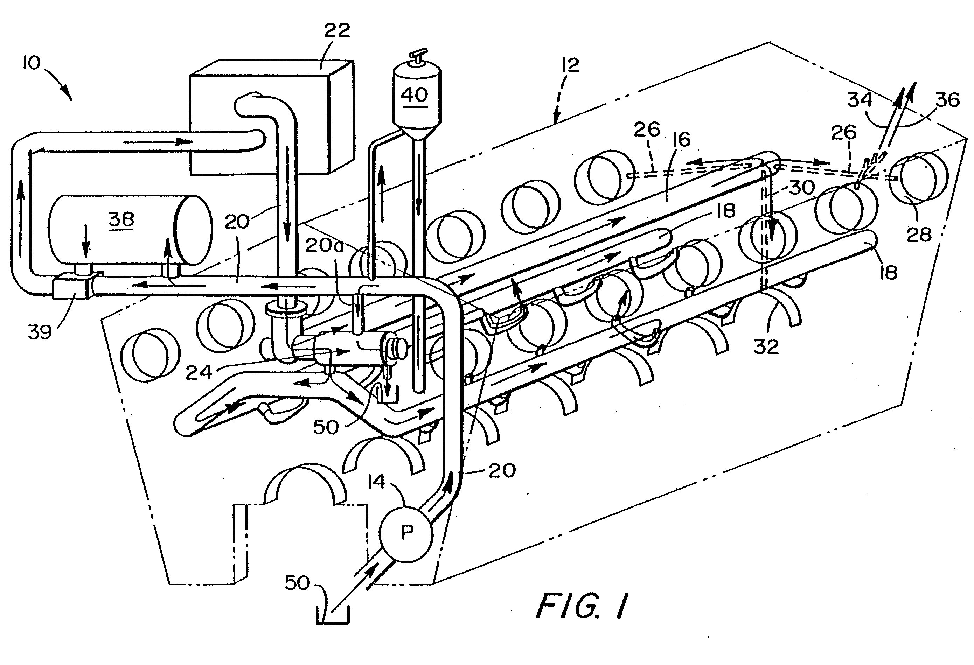

Adverting to Figure 1, there is illustrated therein a system 10 for flowing pressurized fluid to an engine 12. The system 10 includes a pressurized fluid source i.e. a pump 14, a main receptor (manifold) 16, and a pair (at least one receptor) of secondary receptors (manifolds) 18. Fluid is supplied from the pump 14 via a conduit 20 and filtering means 22 to a fluid sequencing valve 24 in accordance with an embodiment of the invention, from which it passes to the main manifold 16 and the secondary manifold 18. Fluid from the main manifold 16 is delivered as via a plurality of passages 26 (two shown) to various camshaft bearings 28, via a plurality of passages 30 (one shown) to crankshaft bearings 32, as indicated by an arrow 34 to the engine rocker arm and valve mechanism, and as indicated by an arrow 36 to a lifter guide. An oil cooler 38 is generally present for cooling the oil as it passes via a conduit 20 and a thermostatic valve 39. A conventional centrifugal oil filter 40 may also be present.

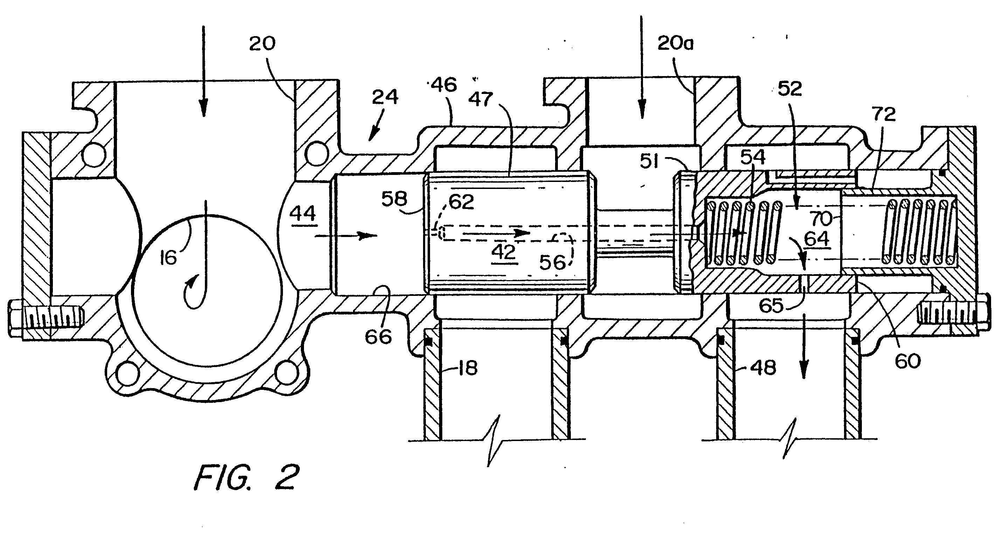

The fluid sequencing valve 24 serves as means for preventing delivery of the fluid from the conduit 20 to the secondary manifold 18 until a pressure of the fluid in the main manifold 16 reaches an initiating value. Such will be particularly apparent by reference to Figures 2—4 and the discussion which follows.

Briefly, the fluid sequencing valve 24 has a first position as illustrated in Figure 2 which blocks delivery of the pressurized fluid from the conduit 20 to the secondary manifold 18. As will be seen in Figure 2, a piston 42 reciprocally fits within a bore 44 in a body 46. The piston 42, as seen in Figure 2, has a land 47 positioned so as to block off flow to the secondary manifold 18. On the other hand, it is seen that flow to the main manifold 16 is not in any way obstructed. Basically, the piston 42 is shown in its first position in the bore 44, said first position comprising a position blocking off the secondary manifold 18.

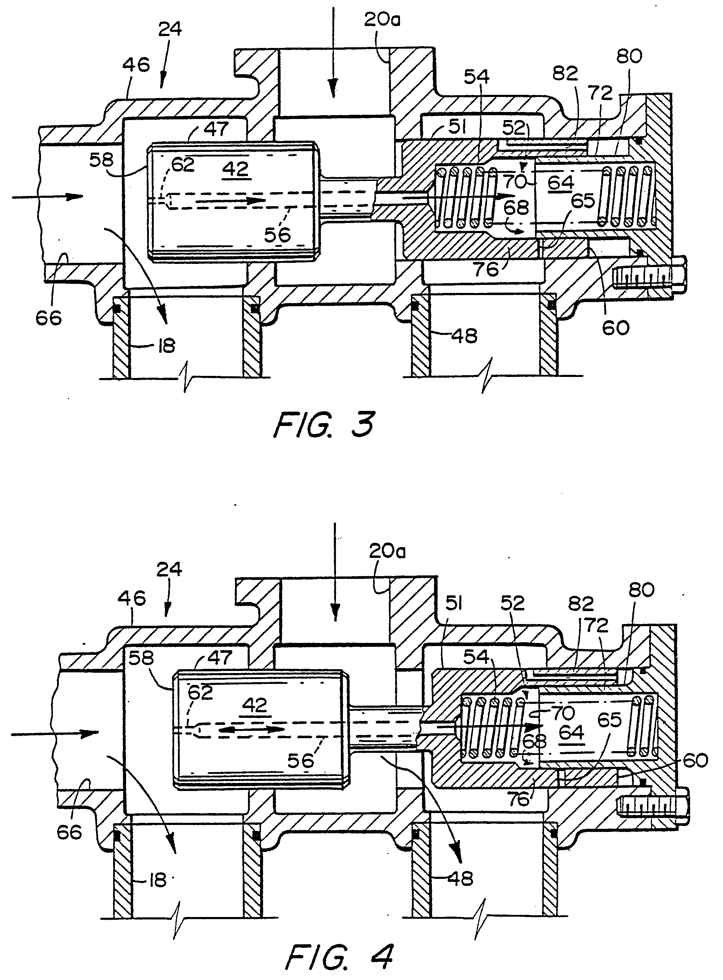

Referring to Figure 3, it will be seen that the piston 42 is in a second position within the bore 44, namely a position wherein flow can occur from the conduit 20 to the secondary manifold 18.

Referring to Figure 4, it will be seen that the position 42 is shown therein in a third position within the bore 44, namely a position which connects a bypass conduit 20a (from conduit 20 upstream of filtering means 22) to a sump conduit 48 which leads off to a sump 50 (Figure 1). Flow proceeds past a land 51 on the piston 42, as illustrated.

A spring 54 acts to motivate the piston 42 towards the first position thereof in the bore 44.

Fluid from the first manifold 16 is delivered via a tunnel 56 through the piston 42 from a first end 58 thereof to a second end 60 thereof. A restricted orifice 62 is at the start of the tunnel 56 and serves to provide a lowered pressure in a spring chamber 64 which extends into the piston second end 60 in other modes of operation. An exit orifice 65 communicates the fluid exiting the tunnel 56 with the sump 50. The exit orifice 65 is so dimensioned in comparison to the restricted orifice 62 whereby the spring chamber 64 is either not pressurized, or pressurized to a selected extent, so long as the exit orifice 65 is open. The force of the spring 54, thus serves as biasing means 52, with the pressure in the spring chamber 64 being substantially zero, or a selected value below the pressure in the first manifold 16 due to the path via exit orifice 65 and sump conduit 48 to the sump 50.

Means, in the embodiment illustrated a portion 66 of the bore 44 which serves to communicate the fluid pressure within the main manifold 16 with the first end 58 of the piston 42, serves for motivating the piston 42 in opposition to the biasing means 52 and into the second position illustrated in Figure 3, responsive to the pressure in the main manifold 16 reaching an initiating value which corresponds to a sufficient value to move the piston 42 rightwardly so as to open flow between the bore 44 and the secondary manifold 18. It is clear that the piston 42, or more particularly the land 47, then serves as means for blocking delivery of the pressurized fluid to the secondary manifold 18 when the piston 42 is in its first position and for allowing such delivery responsive to the piston 42 being in its second position.

Additional biasing means 68 serves, in addition to biasing means 52, for biasing the piston away from a third position thereof shown in Figure 4 and towards the second position thereof shown in Figure 3. In particular, the additional biasing means 68 includes an end 70 of a sleeve 72 which serves for blocking off the exit orifice 65 as the piston 42 moves from the second position (Figure 3) towards the third position (Figure 4). The sleeve 72 extends from the body 46 into mating relation within the piston 42. As the piston 42 moves rightwardly from the position shown in Figure 2 to that shown in Figure 3, the exit orifice 65, which is through a sidewall 76 which defines the spring chamber 64, is blocked off (as in Figure 3) by the end 70 of the sleeve 72. Thus, the additional biasing means 68, includes the pressure in spring chamber 64 acting against a smaller area (the cross-sectional area of the spring chamber 64) than the area of the first end 58 of the piston 42. After the exit orifice 65 is closed, and as the piston 42 continues to move rightwardly, reverse flow occurs in the tunnel 56. Also, some flow can occur about the diametrical clearance between the sidewall 76 of the chamber 64 and an exterior 80 of the sleeve 72. Mainly however, lubrication is all that occurs thereat. A calibrated passage 82 serves to allow fluid trapped between the second end 60 of the piston 42, the body 46, and the sleeve 72 to escape to the sump conduit 48 and thence to the sump 50. The diameter of the passage 82 is so small, that a damping effect of the piston 42 movement occurs due to the trapped oil. This eliminates, or at least acts to limit, flutter of the piston 42. It is clear that additional resistance to movement of the piston 42 results between the position shown in Figure 3 and that shown in Figure 4.

It will be noted that even when unfiltered fluid is being delivered from the branch conduit 20a to the sump conduit 48 as in Figure 4, filtered pressurized fluid is still being delivered to the secondary manifold 18.

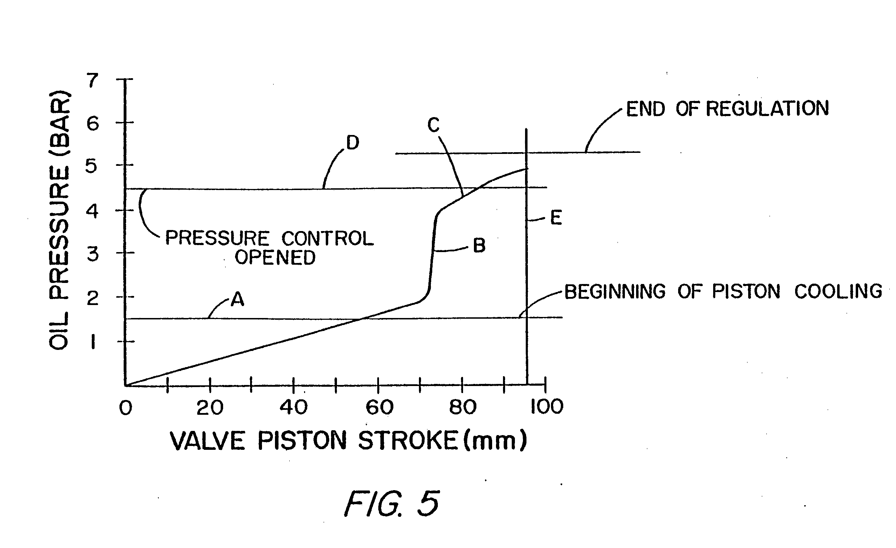

Referring now to Figure 5, one will see that as the oil pressure rises, for example, on engine start up, the piston 42 moves rightwardly and pressure is delivered solely to the main manifold 16. Once the piston 42 has moved a sufficient distance rightwardly, the secondary manifold 18 starts receiving pressurized fluid for use in cooling the engine pistons, or the like. This corresponds to the pressure line marked A in Figure 5. During this period, the pressure in the main manifold 16 acts only against the force of the spring 54 since the spring chamber 64 is relieved by the exit orifice 65. As the exit orifice 65 closes, the oil pressure rises rapidly for very slight movement of the piston 42 as pressure in the spring chamber 64 builds up, as shown in the area marked B in Figure 5. This corresponds to the situation shown in Figure 3. The region of the curve marked C in Figure 5 corresponds to movement from the configuration shown in Figure 3 to that shown in Figure 4. In the region C, the pressure in the spring chamber 64 is not relieved. The bypass from the branch conduit 20a to the sump 50 opens at a pressure level indicated by the line D in Figure 5. The line indicated at E in Figure 5 corresponds to maximum rightward movement of the piston 42. It should be noted that the regulation of the pressure delivered to the main manifold 16 and the secondary manifold 18 is determined by the pressure actually delivered thereat, since the valve 24 is downstream of the filters 22.

The aforementioned improvement is particularly useful in large diesel engine systems wherein it is necessary to utilize cooling jets to spray lubricating oil onto the pistons to cool them. The main manifold 16 receives pressurized fluid at all levels of engine operation, while the secondary manifold 18 receives such fluid only when the engine 12 is operating at a sufficient rate so that the pump 14 is producing fluid above an initiation pressure, A. Thus, the camshaft bearings 32, the crankshaft bearings 28, and the like, are properly lubricated even at start up and low idle operation, since none of the pump flow and pressure is diverted at that time to the secondary manifold 18, where it is not then needed. Further, the valve 24 provides a bypass to the sump 50 substantially right at the main manifold 16, and certainly downstream of the filters 22 and cooler 38, so that smaller size filters and coolers can be used. This assures that any reasonably small pressure loss which may take place in the filters 22 does not in any way effect the regulation of the operating pressure at the main manifold 16 and the secondary manifold 18.

**Claims**

1. Apparatus (24) having a primary fluid receptor (16) which is arranged to be supplied with fluid under pressure; at least one secondary receptor (18); a sump (50); a piston (42) which is reciprocally mounted in a bore (44) communicating with the primary (16) and secondary (18) receptors and with the sump (50) whereby a first end (58) of the piston (42) is exposed to fluid pressure in the primary receptor (16) to urge the piston (42) from a first to a second position against the action of a spring (54), and from the second to a third position against additional bias; the piston (42), when in the first position, preventing delivery of the fluid to the second receptor (18), when in the second position to which the piston moves when the fluid pressure in the primary receptor (16) reaches an initiating value (A), allowing delivery of the fluid to the secondary receptor (18), and, when in the third position to which the piston moves when the fluid pressure in the primary receptor (16) reaches a selected value (D) above the initiating value (A), allowing delivery of excess of the fluid to the sump (50); and the piston (42) having a tunnel (56) extending from an orifice (62) in the first end (58) through the piston (42) to a second end (60) thereof and selectively communicating via an exit orifice (65) with the sump (50) to bleed off fluid, the pressure of which otherwise acts on the second end (60) of the piston (42); characterised in that the exit orifice is open in the first and second positions of the piston (42); and that the piston (42) cooperates with a part (72) mounted at the end of the bore (55) adjacent the piston second end (60) so that the exit orifice (65) is closed as the piston (42) moves towards the third position, thereby trapping fluid in the bore (44) and providing fluid pressure on the second end (60) of the piston (42) to provide the additional bias biasing the piston (42) back towards the second position.

2. Apparatus according to claim 1, wherein the spring (54) is provided in a spring chamber (64) at the second end (60) of the piston (42), the exit orifice (65) being provided in a wall of the spring chamber (64).

3. Apparatus according to claim 2, wherein the spring chamber (64) is provided by a tubular extension (76) of the piston (42) at its second end (60), and by a sleeve (72) forming the part with which the piston (42) cooperates, the piston (42) and sleeve (72) sliding in mating relationship to open and close the exit orifice (65) which is formed in the tubular extension (76).

4. Apparatus according to any one of the preceding claims, wherein the piston has a first land (47) controlling the delivery of fluid from a first conduit (20), which leads to the bore and which communicates with the primary receptor (16), to the secondary receptor (18); and a second land (51) controlling delivery of fluid from a second conduit (20a), which leads to the bore, to a third conduit (48), which leads from the bore to a sump.

5. Apparatus according to claim 4, wherein the first (20) and second (20a) conduits are connected to a common fluid supply incorporating a pump (14) which pumps fluid through filtering means (22) to the primary receptor (16), the second conduit (20a) leading from upstream of the filtering means (22).

6. An engine incorporating apparatus according to any one of the preceding claims, wherein the primary receptor (16) directs fluid to bearing surfaces of the engine, and the secondary receptor (18) directs fluid to pistons of the engine to cool the pistons.

**Revendications**

1. Appareil (24) ayant un récepteur de fluide primaire (16) qui est arrangé pour être alimenté avec un fluide sous pression; au moins un récepteur secondaire (18); un puisard (50); un piston (42) qui est monté à mouvement alternatif dans un alésage (44) communiquant avec les récepteurs primaire (16) et secondaire (18) et avec le puisard (50), ce qui fait qu'une première extrémité (58) du piston (42) est exposée au fluide sous pression dans le récepteur primaire (16) afin de solliciter le piston (42) d'une première à une seconde positions à l'encontre de l'action d'un ressort (54), et de la seconde à une troisième positions à l'encontre d'une sollicitation additionnelle; le piston (42), quand il est dans la première position, empêchant la délivrance du fluide au second récepteur (18), quand il est dans la seconde position à laquelle le piston se déplace quand la pression de fluide dans le récepteur primaire (16) atteint une valeur d'initiation (A), permettant la délivrance du fluide au récepteur secondaire (18) et, quand il est dans la troisième position à laquelle le piston se déplace quand la pression du fluide dans le récepteur primaire (16) atteint une valeur sélectionnée (D) au-dessus de la valeur d'initiation (A), permettant la délivrance de l'excès de fluide vers le puisard (50); et le piston (42) ayant un tunnel (56) s'étendant d'un orifice (62) dans la première extrémité (58) à travers le piston (42) vers une seconde extrémité (60) de celui-ci et communiquant sélectivement, par un orifice de sortie (65), avec le puisard (50) afin d'évacuer le fluide dont la pression autrement, agirait sur la seconde extrémité (60) du piston (42), caractérisé en ce que l'orifice de sortie est ouvert dans la première et la seconde positions du piston (42); et en ce que le piston (42) coopère avec une partie (72) montée à l'extrémité de l'alésage (55), près de la seconde extrémité (60) du piston, de sorte que l'orifice de sortie (65) est fermé quand le piston (42) se déplace vers la troisième position, emprisonnant ainsi le fluide dans l'alésage (44) et produisant une pression de fluide sur la seconde extrémité (60) du piston (42) afin de produire la sollicitation additionnelle rappelant le piston (42) vers la seconde position.

2. Appareil selon la revendication 1, dans lequel le ressort (54) est logé dans une chambre de ressort (64) située à la seconde extrémité (60) du piston (42), l'orifice de sortie (65) étant prévu dans une paroi de la chambre de ressort (64).

3. Appareil selon la revendication 2, dans lequel la chambre de ressort (64) est constituée par un prolongement tubulaire (76) à la seconde extrémité (60) du piston (42) et par un manchon (72) formant la partie avec laquelle le piston (42) coopère, le piston (42) et le manchon (72) coulissant en relation d'apparition pour ouvrir et fermer l'orifice de sortie (65) qui est formé dans le prolongement tubulaire (76).

4. Appareil selon l'une quelconque des revendications précédentes, dans lequel le piston a une première portée (47) qui commande la délivrance du fluide d'un premier conduit (20), qui aboutit à l'alésage et communique avec le récepteur primaire (16), au récepteur secondaire (18); et une seconde portée (51) qui commande la délivrance du fluide d'un second conduit (20a), qui aboutit à l'alésage, à un troisième conduit (48), qui va de l'alésage à un puisard.

5. Appareil selon la revendication 4, dans lequel le premier (20) et le second (20a) conduits sont reliés à une alimentation de fluide commune comportant une pompe (14) qui envoie le fluide à travers des moyens de filtrage (22) vers le récepteur primaire (16), le second conduit (20a) partant en amont des moyens de filtrage (22).

6. Moteur comportant un appareil selon l'une quelconque des revendications précédentes, dans lequel le récepteur primaire (16) dirige le fluide vers des surfaces portantes du moteur, et le récepteur secondaire (18) dirige le fluide vers les pistons du moteur afin de refroidir ces pistons.

## Patentansprüche

1. Vorrichtung (24) mit einer primären Strömungsmittelaufnahmevorrichtung (16), die zur Belieferung mit einem unter Druck stehenden Strömungsmittel angeordnet ist, mindestens eine sekundäre Aufnahmevorrichtung (18), einem Sumpf (50), einem hin- und herbewegbar in einer Bohrung (44) angeordneten Kolben (42), wobei die Bohrung (44) in Verbindung mit der primären (16) und der sekundären (18) Aufnahmevorrichtung und mit dem Sumpf (50) steht, wodurch ein erstes Ende (58) des Kolbens (42) gegenüber Strömungsmitteldruck in der primären (16) und der sekundären (18) Aufnahmevorrichtung und mit dem Sumpf (50) steht, wodurch ein erstes Ende (58) des Kolbens (42) gegenüber Strömungsmitteldruck in der primären Aufnahmevorrichtung (16) ausgesetzt ist, um den Kolben (42) aus einer ersten in eine zweite Position entgegen der Wirkung einer Feder (54) zu drücken, und aus der zweiten in eine dritte Position gegenüber einer zusätzlichen Vorspannung, wobei der Kolben (42) in der ersten Position die Strömungsmittellieferung an die zweite Aufnahmevorrichtung (18) verhindert, während dann, wenn er sich in der zweiten Position befindet, in die er sich dann bewegt, wenn der Strömungsmitteldruck in der primären Aufnahmevorrichtung (16) einen Einleitwert (A) erreicht, die Strömungsmittellieferung zu der sekundären Aufnahmevorrichtung (18) gestattet, und wobei der Kolben dann, wenn er sich in der dritten Position befindet, in die er sich bewegt, wenn der Strömungsmitteldruck in der primären Aufnahmevorrichtung (16) einen vorgewählten Wert (D) oberhalb des Einleitwerts (A) erreicht, die Lieferung von überschüssigem Strömungsmittel an den Sumpf (50) gestattet, und wobei der Kolben (42) einen Tunnel (56) aufweist, der sich von einer Zumeßöffnung (62) im ersten Ende (58) aus durch den Kolben (42) zu einem zweiten Ende (60) desselben erstreckt und in selektiver Weise über eine Austrittsöffnung (65) mit dem Sumpf (50) in Verbindung steht, um Strömungsmittel abzulassen, wobei der Druck ansonsten auf das zweite Ende (60) des Kolbens (42) wirkt, dadurch gekennzeichnet, daß die Austrittsöffnung in den ersten und zweiten Positionen des Kolbens (42) offen ist, und daß der Kolben (42) mit einem Teil (72) angeordnet an dem Ende der Bohrung (55) benachbart zum zweiten Ende (60) des Kolbens derart zusammenwirkt, daß die Austrittsöffnung (65) geschlossen ist, wenn der Kolben (42) sich zur dritten Position bewegt, wodurch Strömungsmittel in der Bohrung (44) eingefangen wird und ein Strömungsmitteldruck am zweiten Ende (60) des Kolbens (42) vorgesehen wird, um die zusätzliche Vorspannung zu erzeugen, die den Kolben (42) zurück zur zweiten Position hin vorspannt.

2. Vorrichtung nach Anspruch 1, wobei die Feder (54) in einer Federkammer (64) am zweiten Ende (60) des Kolbens (42) vorgesehen ist, und wobei die Austrittsöffnung (65) in einer Wand der Federkammer (64) vorgesehen ist.

3. Vorrichtung nach Anspruch 2, wobei die Federkammer (64) durch eine Rohrverlängerung (76) des Kolbens (42) an seinem zweiten Ende (60) vorgesehen ist, und durch eine Hülse (72), die den Teil, mit dem der Kolben (42) zusammenarbeitet, bildet, und wobei Kolben (42) und Hülse (72) in einer zusammenpassenden Beziehung gleiten, um die Austrittsöffnung (65), gebildet in der rohrförmigen Verlängerung (76), zu öffnen und zu schließen.

4. Vorrichtung nach einem der vorhergehenden Ansprüche, wobei der Kolben einen ersten Steg (47) aufweist, und zwar zur Steuerung der Strömungsmittellieferung von einer ersten Leitung 20, die zur Bohrung führt und die mit der primären Aufnahmevorrichtung (16) in Verbindung steht, an die zweite Aufnahmevorrichtung (18), und wobei ferner ein zweiter Steg (51) die Strömungsmittellieferung von einer zweiten Leitung (20a) aus, die zur Bohrung führt, zu einer dritten Leitung (48) steuert, welche von der Bohrung zu einem Sumpf führt.

5. Vorrichtung nach Anspruch 4, wobei die ersten (20) und zweiten (20a) Leitungen mit einer gemeinsamen Strömungsmittelversorgung verbunden sind, die eine Pumpe (14) umfaßt, welche Strömungsmittel durch Filtermittel (22) zur primären Aufnahmevorrichtung (16) pumpt, wobei die zweite Leitung (20a) von einer Stelle stromaufwärts gegenüber den Filtermitteln (22) ausgeht.

6. Motor mit einer Vorrichtung gemäß einem der vorhergehenden Ansprüche, wobei die primäre Aufnahmevorrichtung (16) Strömungsmittel zu Lageroberflachen des Motors leitet, und wobei die zweite Aufnahmevorrichtung (18) Strömungsmittel zu den Kolben des Motors zum Zwecke von deren Kühlung leitet.

FIG. I

FIG. 2

0 037 395

FIG. 3

FIG. 4

3

FIG. 5